# EUROPEAN PATENT APPLICATION

(11) **EP 4 811 458 A1**
(43) Date of publication of application: **23.09.2026**
(21) Application number: 24891333.7
(22) Date of filing: 08.11.2024
(51) Int. Cl.: H01M 4/62, C08F 220/04, H01G 11/06, H01G 11/38, H01M 4/13, H01M 4/133, H01M 4/139, H01M 4/1393, H01M 4/48, H01M 4/587

(54) **BINDER COMPOSITION FOR ELECTRIC POWER STORAGE DEVICE, SLURRY FOR ELECTRIC POWER STORAGE DEVICE ELECTRODE, ELECTRIC POWER STORAGE DEVICE ELECTRODE, AND ELECTRIC POWER STORAGE DEVICE**

(30) Priority: 15.11.2023 JP 2023194242
(71) Applicant: ENEOS Materials Corporation, Tokyo 105-7109 (JP)
(72) Inventor: HEIGUCHI, Sadatoshi, Tokyo 105-7109 (JP); OHASHI, Taira, Tokyo 105-7109 (JP); ITO, Toshiyuki, Tokyo 105-7109 (JP); HONDA, Tatsuaki, Tokyo 105-7109 (JP); TONERI, Tatsuya, Tokyo 105-7109 (JP); NISHIMURA, So, Tokyo 105-7109 (JP)
(74) Representative: Becker, Eberhard
(86) International application number: PCT/JP2024/039769
(87) International publication number: WO 2025/105297

(57) **Abstract**

Provided is a binder composition for an electric power storage device, the binder composition making it possible to: manufacture an electric power storage device electrode that has exceptional defoaming properties for a slurry for the electrode, has exceptional adhesive properties, and is such that electrode expansion associated with repeated charging and discharging is suppressed; and improve the cycle service-life properties of the electric power storage device. A binder composition for an electric power storage device according to the invention contains a polymer (A) and a liquid medium (B). The polymer (A) contains 1 mass% to 40 mass% of repeating units (a1) derived from an unsaturated carboxylic acid and 5 mass% to 40 mass% of repeating units (a2) derived from an α,β-unsaturated nitrile compound, where the total of the repeating units contained in the polymer (A) is regarded as 100 mass%. The polymer (A) also satisfies the following condition. 0.30 g of a film obtained by introducing 0.30 g of the polymer (A) in terms of solid content into a Petri dish having a diameter of 5 cm, and then drying the polymer (A) in a constant-temperature oven at 130°C for 30 minutes, is cut into pieces having a width of 5 mm. All resulting pieces of the film are immersed in 30 mL of a sodium hydroxide aqueous solution (0.01 M) having a pH of 12 and stirred for 2 hours in a hot-water tank at 65°C. After the stirring, a component eluted into a water layer is separated and dried. The ratio (N_{B}/N_{A}) is 0.10 or less, where N_{B} is the amount of an N element component contained in the dry solid, and N_{A} is the amount of the N element component contained in the polymer (A).

## Description

### Technical Field

The invention relates to a binder composition for an electric power storage device, a slurry for an electric power storage device electrode, an electric power storage device electrode, and an electric power storage device.

### Related Art

In recent years, electric power storage devices having a high voltage and a high energy density have been required as the power sources for driving electronic apparatuses. As such electric power storage devices, lithium-ion batteries and lithium-ion capacitors have been anticipated.

An electrode used in such an electric power storage device is manufactured by applying and drying a composition (slurry for an electric power storage device electrode) containing an active material and a polymer functioning as a binder on a surface of a current collector. Properties required for the polymer used as a binder include the binding ability between active materials and the adhesion ability between the active material and the current collector, and the powder fall-off resistance with which a fine powder of the active material does not fall off from the active material layer at the time of cutting a coated and dried composition coating film (hereinafter also referred to as "active material layer"). By allowing such binder material to exhibit favorable adhesion properties and reducing the internal resistance of the battery attributable to the binder material, favorable charge-discharge properties can be imparted to the electric power storage device.

It has been empirically clarified that the binding ability between active materials, the adhesion ability between the active material and the current collector, and the powder fall-off resistance are substantially proportional to the quality of performance. Therefore, in the present specification, these may hereinafter be collectively referred to by using the term "adhesion."

On the other hand, the use of materials with a large lithium-ion storage capacity has been studied to further increase the capacity of the electric power storage device. An active material utilizing a material with a large lithium-ion storage capacity is accompanied by a large volume change due to the storage and release of lithium ions. For this reason, at the time of applying a conventionally used electrode binder to such material with a large lithium storage capacity, the adhesion cannot be maintained and the active material peels off, and a pronounced capacity reduction occurs through charging and discharging.

As the techniques for improving the adhesion of an electrode binder, techniques for controlling the surface acid amount of the particulate binder particles (see Patent Documents 1 and 2) have been proposed.

### Prior Art Documents

### Patent Documents

Patent Document 1: International Publication No. 2013/191080
Patent Document 2: International Publication No. 2016/039067

### SUMMARY OF INVENTION

### Technical Problem

However, in the electrode binders disclosed in Patent Documents 1 and 2, bubbles tend to remain during preparation of the slurry for electrode. When bubbles remain in the slurry for electrode, a reduction in density and non-uniformity tend to occur in the resulting active material layer, leading to a damage due to defect generation and reduction in strength, and thus there has been a problem that the yield of manufacture of electrodes decreases.

Some aspects according to the disclosure provide a binder composition for an electric power storage device that excels in defoaming properties of a slurry for electrode, excels in adhesion, and is capable of manufacturing an electric power storage device electrode in which the electrode expansion through repeated charging and discharging is suppressed, and is further capable of improving cycle life properties of the electric power storage device.

### Solution to Problem

The disclosure has been made to solve at least some of the above-described problems, and can be realized as any of the following aspects.

An aspect of a binder composition for an electric power storage device according to the disclosure is a binder composition for an electric power storage device that includes: a polymer (A) and a liquid medium (B). When a total of repeating units contained in the polymer (A) is 100 mass%, the polymer (A) includes: 1 mass% to 40 mass% of a repeating unit (a1) derived from an unsaturated carboxylic acid; and 5 mass% to 40 mass% of a repeating unit (a2) derived from an α,β-unsaturated nitrile compound, and satisfies Condition as follows:
<Condition>
a film of 0.30 g obtained by placing 0.30 g of the polymer (A) in terms of solid content into a petri dish having a diameter of 5 cm and drying in a thermostatic chamber at 130°C for 30 minutes is cut into 5 mm widths, all fragments of the obtained film are immersed in 30 mL of a sodium hydroxide aqueous solution (0.01 M) at pH 12 and stirred in a warm water bath at 65°C for 2 hours, and, after stirring, components eluting into an aqueous layer are separated and dried to a dry solid, and a ratio (N_{B}/N_{A}) between a content of N element components contained in the dry solid, defined as N_{B}, and a content of N element components contained in the polymer (A), defined as N_{A}, is 0.10 or less.

In an embodiment of the binder composition for the electric power storage device, it may also be that, when a content of the components eluting into the aqueous layer is defined as C, a ratio (C/Cₐ₁) between the content C and a content Cₐ₁ of the repeating unit (a1) derived from the unsaturated carboxylic acid is 0.65 or less.

In any one of the embodiments of the binder composition for the electric power storage device, it may also be that, the polymer (A) further includes 5 mass% to 65 mass% of a repeating unit (a3) derived from a conjugated diene compound.

In any one of the embodiments of the binder composition for the electric power storage device, it may also be that, based on 100 mass% of the polymer (A), a ratio of the components eluting into the aqueous layer is 5 mass% or less.

In any one of the embodiments of the binder composition for the electric power storage device, it may also be that, an electrolyte solution swelling rate when the polymer (A) is immersed in a solvent formed of propylene carbonate and diethyl carbonate at a volume fraction of 1:1 under a condition of 70°C for 24 hours is 150% or more and 500% or less.

In any one of the embodiments of the binder composition for the electric power storage device, it may also be that the polymer (A) is polymer particles, and a Z-average particle diameter of the polymer particles is 50 nm or more and 500 nm or less.

In any one of the embodiments of the binder composition for an electric power storage device, it may also be that the liquid medium (B) is water.

An aspect of a slurry for an electric power storage device electrode according to the invention includes: the binder composition for the electric power storage device of any one of the embodiments; and an active material.

In an aspect of the slurry for the electric power storage device electrode, the slurry may include graphite and a silicon material as the active material.

In any one of the aspects of the slurry for an electric power storage device electrode, a thickener may further be included.

An aspect of an electric power storage device electrode according to the invention includes: a current collector; and an active material layer, formed by applying and drying the slurry for the electric power storage device electrode of any one of the aspects on a surface of the current collector.

An aspect of an electric power storage device according to the invention includes:
the electric power storage device electrode of the aspect.

### Effects of Invention

According to the binder composition for the electric power storage device according to the invention, a slurry for electrode having excellent defoaming properties may be obtained, so the yield during manufacture of electrodes can be increased. In addition, according to the binder composition for an electric power storage device according to the invention, an electric power storage device electrode having excellent adhesion and suppression of electrode expansion accompanying repeated charge and discharge can be manufactured, and consequently, the cycle properties of the electric power storage device can be improved.

### DESCRIPTION OF THE EMBODIMENTS

Hereinafter, exemplary embodiments according to the invention will be described in detail. The invention is not limited to the embodiments described below, and should be understood to include various modification examples implemented within a range that does not change the gist of the invention.

In the present specification, "(meth)acrylic acid~" represents "acrylic acid~" or "methacrylic acid~", "~(meth)acrylate" represents "~acrylate" or "~methacrylate", and "(meth)acrylamide" represents "acrylamide" or "methacrylamide".

In the present specification, a numerical range described as "X to Y" is interpreted as including the numerical value X as a lower limit and the numerical value Y as an upper limit.

### 1. Binder Composition for Electric Power Storage Device

A binder composition for an electric power storage device according to an embodiment of the invention includes a polymer (A) and a liquid medium (B). The polymer (A) contains, based on 100 mass% of the total of the repeating units contained in the polymer (A), 1 mass% to 40 mass% of a repeating unit (a1) derived from an unsaturated carboxylic acid and 5 mass% to 40 mass% of a repeating unit (a2) derived from an α,β-unsaturated nitrile compound.

The polymer (A) satisfies the following conditions. Specifically, 0.30 g of the polymer (A) in terms of solid content is placed in a petri dish having a diameter of 5 cm, and a film of 0.30 g obtained by drying in a thermostatic chamber at 130°C for 30 minutes is cut into 5 mm widths. All fragments of the obtained film are immersed in 30 mL of a sodium hydroxide aqueous solution (0.01 M) at pH 12, and stirred in a warm water bath at 65°C for 2 hours. After stirring, the components eluting into the aqueous layer are separated and dried to a dry solid, and a ratio (N_{B}/N_{A}) between the content of N element components contained in the dry solid, N_{B}, and a content of N element components contained in the polymer (A), N_{A}, is 0.10 or less.

The binder composition for the electric power storage device according to the embodiment can be used as a material for manufacturing an electric power storage device electrode (active material layer) with improved binding ability between active materials, adhesion ability between the active material and a current collector, and powder fall-off resistance, and can also be used as a material for forming a protective film for suppressing a short circuit due to dendrites generated through charging and discharging. Hereinafter, each component contained in the binder composition for the electric power storage device according to the embodiment will be described in detail.

### 1.1 Polymer (A)

The binder composition for the electric power storage device according to the embodiment includes the polymer (A). The polymer (A) may be in a latex form dispersed in the liquid medium (B) described later, or may be in a state of being dissolved in the liquid medium (B), but a latex state dispersed in the liquid medium (B) is preferable. A latex state in which the polymer (A) is dispersed in the liquid medium (B) is preferable because the stability of a slurry (hereinafter also referred to as "slurry") for the electric power storage device electrode manufactured by mixing with an active material is favorable, and the applicability of the slurry to a current collector is favorable.

Hereinafter, the repeating units forming the polymer (A), the physical properties of the polymer (A), and the manufacturing method will be described in this order.

### 1.1.1 Repeating Units Forming Polymer (A)

The polymer (A) contains, based on 100 mass% of the total of the repeating units contained in the polymer (A), 1 mass% to 40 mass% of a repeating unit (a1) (hereinafter also referred to as "repeating unit (a1)") derived from an unsaturated carboxylic acid and 5 mass% to 40 mass% of a repeating unit (hereinafter also referred to as "repeating unit (a2)") derived from an α,β-unsaturated nitrile compound (a2). In addition, the polymer (A) may contain, in addition to the repeating unit (a1) and the repeating unit (a2), a repeating unit derived from another monomer copolymerizable therewith.

### 1.1.1.1 Repeating Unit (a1) Derived from Unsaturated Carboxylic Acid

The content ratio of the repeating unit (a1) derived from an unsaturated carboxylic acid is 1 mass% to 40 mass% based on 100 mass% of the total of the repeating units contained in the polymer (A). The lower limit of the content ratio of the repeating unit (a1) is preferably 2 mass%, more preferably 3 mass%, and particularly preferably 5 mass%. The upper limit of the content ratio of the repeating unit (a1) is preferably 35 mass%, more preferably 30 mass%, and particularly preferably 25 mass%. By containing the repeating unit (a1) in the polymer (A) within the range described above, the adhesion between a current collector and an active material layer can be improved, and the adhesion strength of an electrode is improved.

The unsaturated carboxylic acid is not particularly limited, and examples thereof include monocarboxylic acids and dicarboxylic acids (including anhydrides) such as acrylic acid, methacrylic acid, crotonic acid, maleic acid, fumaric acid, and itaconic acid, and one or more selected from the above can be used. Among these, it is preferable to use one or more selected from acrylic acid, methacrylic acid, and itaconic acid.

### 1.1.1.2. Repeating Unit (a2) Derived from α,β-unsaturated Nitrile Compound

The content ratio of the repeating unit (a2) derived from an α,β-unsaturated nitrile compound is 5 mass% to 40 mass% based on 100 mass% of the total of the repeating units contained in the polymer (A). The lower limit of the content ratio of the repeating unit (a2) is preferably 6 mass%, more preferably 8 mass%, and particularly preferably 10 mass%. The upper limit of the content ratio of the repeating unit (a2) is preferably 35 mass%, more preferably 30 mass%, and particularly preferably 25 mass%. By containing the repeating unit (a2) in the polymer (A) within the range described above, the dissolution of the polymer (A) in an electrolyte solution can be reduced, the affinity between the polymer (A) and the electrolyte solution is improved, and the increase in internal resistance due to the binder becoming an electrical resistance component in an electric power storage device can be suppressed.

The α,β-unsaturated nitrile compound is not particularly limited, and examples thereof include acrylonitrile, methacrylonitrile, α-chloroacrylonitrile, α-ethylacrylonitrile, and vinylidene cyanide, and one or more selected from the above can be used. Among these, one or more selected from the group consisting of acrylonitrile and methacrylonitrile is preferable, and acrylonitrile is particularly preferable.

### 1.1.1.3. Other Repeating Units

The polymer (A) may contain, in addition to the repeating unit (a1) and the repeating unit (a2), repeating units derived from other monomers copolymerizable therewith. Examples of such repeating units include a repeating unit (a3) (hereinafter also referred to as "repeating unit (a3)") derived from a conjugated diene compound, a repeating unit (a4) (hereinafter also referred to as "repeating unit (a4)") derived from an unsaturated carboxylic acid ester, a repeating unit (a5) (hereinafter also referred to as "repeating unit (a5)") derived from an aromatic vinyl compound, a repeating unit derived from (meth)acrylamide, a repeating unit derived from a compound having a sulfonic acid group, and a repeating unit derived from a cationic monomer.

### <Repeating Unit (a3) Derived from Conjugated Diene Compound>

The content ratio of the repeating unit (a3) derived from the conjugated diene compound is preferably 5 mass% to 65 mass% based on 100 mass% of the total of the repeating units contained in the polymer (A). The lower limit of the content ratio of the repeating unit (a3) is more preferably 10 mass%, and particularly preferably 20 mass%. The upper limit of the content ratio of the repeating unit (a3) is more preferably 60 mass%, and particularly preferably 55 mass%. By containing the repeating unit (a3) in the polymer (A) within the range described above, the dispersibility of an active material and a filler can be improved, and a homogeneous active material layer and protective film can be manufactured, thereby eliminating structural defects in an electrode plate, and in some cases exhibiting favorable repeated charge-discharge properties. In addition, the stretchability can be imparted to the polymer (A) covering the surface of the active material, and the adhesion can be improved by the stretching and contracting of the polymer (A), and in some cases favorable charge-discharge durability properties can be exhibited.

The conjugated diene compound is not particularly limited, and examples thereof include 1,3-butadiene, 2-methyl-1,3-butadiene, 2,3-dimethyl-1,3-butadiene, and 2-chloro-1,3-butadiene, and one or more selected from the above can be used. Among these, 1,3-butadiene is particularly preferable.

### <Repeating Unit (a4) Derived from Unsaturated Carboxylic Acid Ester>

The polymer (A) may contain a repeating unit (a4) derived from an unsaturated carboxylic acid ester. The content ratio of the repeating unit (a4) is preferably 0.1 mass% to 10 mass% based on 100 mass% of the total of the repeating units contained in the polymer (A). The lower limit of the content ratio of the repeating unit (a4) is more preferably 1 mass%, and particularly preferably 2 mass%. The upper limit of the content ratio of the repeating unit (a4) is more preferably 9 mass%, and particularly preferably 8 mass%. By containing the repeating unit (a4) in the polymer (A) within the range described above, the affinity between the polymer (A) and an electrolyte solution can be improved, and in some cases an increase in internal resistance due to the binder becoming an electrical resistance component in the electric power storage device can be suppressed.

Among the unsaturated carboxylic acid esters, (meth)acrylic acid esters can be preferably used. Specific examples of the (meth)acrylic acid esters include methyl (meth)acrylate, ethyl (meth)acrylate, n-propyl (meth)acrylate, isopropyl (meth)acrylate, n-butyl (meth)acrylate, isobutyl (meth)acrylate, n-amyl (meth)acrylate, isoamyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, glycerin mono(meth)acrylate, and glycerin di(meth)acrylate, and one or more selected from the above can be used. Among these, one or more selected from methyl (meth)acrylate, ethyl (meth)acrylate, n-butyl (meth)acrylate, 2-ethylhexyl (meth)acrylate, cyclohexyl (meth)acrylate, ethylene glycol di(meth)acrylate, and 2-hydroxyethyl (meth)acrylate is preferable, and methyl (meth)acrylate is particularly preferable.

### <Repeating Unit (a5) Derived from Aromatic Vinyl Compound>

The content ratio of the repeating unit (a5) derived from an aromatic vinyl compound is preferably 15 mass% to 49 mass% based on 100 mass% of the total of the repeating units contained in the polymer (A). The lower limit of the content ratio of the repeating unit (a5) is more preferably 17 mass%, and particularly preferably 20 mass%. The upper limit of the content ratio of the repeating unit (a5) is more preferably 47 mass%, and particularly preferably 45 mass%. By containing the repeating unit (a5) in the polymer (A) within the range described above, fusion between the polymers (A) dispersed in the active material layer can be suppressed, favorable slurry properties can be exhibited, and in some cases coatability can be improved. In addition, since the permeability of the electrolyte solution may be improved, favorable repeated charge-discharge properties can be exhibited in some cases. Furthermore, a favorable binding ability can be exhibited with respect to silicon materials, graphite, and the like used as the active material, and in some cases an electric power storage device electrode having excellent adhesion can be obtained.

The aromatic vinyl compound is not particularly limited, and examples thereof include styrene, α-methylstyrene, p-methylstyrene, vinyltoluene, chlorostyrene, and divinylbenzene, and one or more selected from the above can be used. Among these, styrene is particularly preferable.

### <Repeating Unit Derived from (Meth)acrylamide>

The polymer (A) may contain a repeating unit derived from (meth)acrylamide. The content ratio of the repeating unit derived from (meth)acrylamide is preferably 0 mass% to 8 mass% based on 100 mass% of the total of the repeating units contained in the polymer (A). The lower limit of the content ratio of the repeating unit derived from (meth)acrylamide is more preferably 0.5 mass%, and particularly preferably 1 mass%. The upper limit of the content ratio of the repeating unit derived from (meth)acrylamide is more preferably 7 mass%, and particularly preferably 6 mass%. By containing the repeating unit derived from (meth)acrylamide in the polymer (A) within the range described above, the dispersibility of the active material and the filler in the slurry may be improved in some cases. In addition, the flexibility of the resulting active material layer may become appropriate, and in some cases the adhesion between the current collector and the active material layer can be improved.

The (meth)acrylamide is not particularly limited, and examples thereof include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolacrylamide, N-methylolmethacrylamide, diacetoneacrylamide, and maleic acid amide, and one or more selected from the above can be used.

### <Repeating Unit Derived from Compound Having Sulfonic Acid Group>

The polymer (A) may contain a repeating unit derived from a compound having a sulfonic acid group. The content ratio of the repeating unit derived from a compound having a sulfonic acid group is preferably 0 mass% to 8 mass% based on 100 mass% of the total of the repeating units contained in the polymer (A). The lower limit of the content ratio of the repeating unit derived from a compound having a sulfonic acid group is more preferably 0.5 mass%, and particularly preferably 1 mass%. The upper limit of the content ratio of the repeating unit derived from a compound having a sulfonic acid group is more preferably 7 mass%, and particularly preferably 6 mass%. By containing the repeating unit derived from a compound having a sulfonic acid group in the polymer (A) within the range described above, the dispersibility of the active material and the filler can be improved, and in some cases homogeneous active material layers and protective films can be manufactured. Furthermore, the adhesion with the current collector can be enhanced, and structural defects in the electrode plate can be reduced, which in some cases may result in favorable charge-discharge properties.

The compound having a sulfonic acid group is not particularly limited, and examples thereof include compounds such as vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, acrylamido tert-butylsulfonic acid, 2-hydroxy-3-acrylamidopropanesulfonic acid, and 3-allyloxy-2-hydroxypropanesulfonic acid, and alkali salts thereof, and one or more selected from the above can be used.

### <Repeating Unit Derived from Cationic Monomer>

The polymer (A) may contain a repeating unit derived from a cationic monomer. The cationic monomer is not particularly limited, and is preferably at least one monomer selected from the group consisting of secondary amine (salts), tertiary amine (salts), and quaternary ammonium salts. Specific examples of the cationic monomer include 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylaminoethyl (meth)acrylate, 2-(0-[1'-methylpropylideneamino]carboxamino)ethyl (meth)acrylate, 2-(1-aziridinyl)ethyl (meth)acrylate, methacroylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichloromide, N-allylbenzylamine, N-allylaniline, 2,4-diamino-6-diallylamino-1,3,5-triazine, N-trans-cinnamyl-N-methyl-(1-naphthylmethyl)amine hydrochloride, and trans-N-(6,6-dimethyl-2-hepten-4-ynyl)-N-methyl-1-naphthylmethylamine hydrochloride, and one or more selected from the above can be used.

### 1.1.2. Physical Properties of Polymer (A)

### 1.1.2.1. Content of N Element Component Eluting into Water

The polymer (A) satisfies the following conditions. Specifically, 0.30 g of the polymer (A) in terms of solid content is placed in a petri dish having a diameter of 5 cm, and a film of 0.30 g obtained by drying in a thermostatic chamber at 130°C for 30 minutes is cut into 5 mm widths. All the fragments of the obtained film are immersed in 30 mL of a sodium hydroxide aqueous solution (0.01 M) at pH 12, and stirred in a warm water bath at 65°C for 2 hours. After stirring, the components eluting into the aqueous layer are separated and dried to a dry solid, and the ratio (N_{B}/N_{A}) between the content of N element component contained in the dry solid, designated as N_{B}, and the content of N element component contained in the polymer (A), designated as N_{A}, is 0.10 or less.

The measurement of the elemental analysis is performed by the following method. Using "SUMIGRAPH (registered trademark) NC-TRINITY" (total nitrogen/total carbon measuring apparatus) manufactured by Sumika Chemical Analysis Service, Ltd., approximately 100 mg of the polymer (A) and the dry solid are weighed, and the content of N element component contained in each sample is obtained by a combustion method/improved Dumas method. Next, based on the molecular weights of the N element and acrylonitrile, the content is converted to a bound acrylonitrile amount, and the value of (N_{B}/N_{A}) is determined.

In the case where the value of (N_{B}/N_{A}) is 0.10 or less, this means that the ratio of acrylonitrile in the components eluting from the polymer (A) into the aqueous layer is considerably low, and the amount of bubbles remaining in the slurry after stirring and defoaming under a reduced pressure, particularly during preparation of the slurry for ab electric power storage device, can be reduced. The components eluting from the polymer (A) into the aqueous layer have an effect of stabilizing bubble interfaces, and the effect of stabilizing bubble interfaces increases in particular as the ratio of acrylonitrile increases. Therefore, in the case where the value of (N_{B}/N_{A}) exceeds 0.10, it is considered that bubbles become difficult to break during stirring and defoaming under a reduced pressure, and the amount of bubbles remaining in the slurry increases. In the case where the remaining bubbles are transferred to the electrode, pinhole-like defects are generated, and the defect rate of the electric power storage device deteriorates. Therefore, the value of (N_{B}/N_{A}) is preferably lower, more preferably 0.09 or less, further more preferably 0.08 or less, and particularly preferably 0.07 or less.

In addition, it is preferable that the ratio of the components eluting into the aqueous layer of the polymer (A) is 5 mass% or less, based on 100 mass% of the polymer (A). In the case where the content ratio of the water-eluting components of the polymer (A) is 5 mass% or less, the amount of bubbles remaining in the slurry after stirring and defoaming under a reduced pressure, in particular during preparation of the slurry for an electric power storage device, can be reduced. Since the components eluting into the aqueous layer of the polymer (A) have an effect of stabilizing bubble interfaces, in the case where the proportion of the components eluting into the aqueous layer exceeds 5 mass%, it is considered that bubbles become difficult to break during stirring and defoaming under reduced pressure, and the amount of bubbles remaining in the slurry increases. When transferred to the electrode, the remaining bubbles may generate pinhole-like defects and the defect rate of the electric power storage device deteriorates, it is considered preferable that the components eluting into the aqueous layer of the polymer (A) are 5 mass% or less.

Furthermore, it is preferable that a ratio (C/Cₐ₁) between a content C of the components eluting into the aqueous layer and a content Cₐ₁ of the repeating unit (a1) derived from an unsaturated carboxylic acid is 0.65 or less. In the case where the value of (C/Cₐ₁) exceeds 0.65, there is a concern that the repeating unit (a1) derived from an unsaturated carboxylic acid is less than the amount needed, or the content of the components eluting into the aqueous layer becomes excessive, leading to deterioration in performance and/or an increase in the defect rate of the electric power storage device. In the case where the value of (C/Cₐ₁) is 0.65 or less, it is considered that the polymer contains the repeating unit (a1) derived from an unsaturated carboxylic acid in an amount that satisfies the requirement, and the amount of components eluting into the aqueous layer is suppressed, thereby contributing to both improvement in performance and reduction in the defect rate of the electric power storage device. Therefore, the value of (C/Cₐ₁) is preferably lower, more preferably 0.60 or less, further more preferably 0.50 or less, and particularly preferably 0.45 or less.

### 1.1.2.2. Z-Average Particle Diameter

In the case where the polymer (A) is in the form of particles, a Z-average particle diameter of the particles is preferably 50 nm or more and 500 nm or less, more preferably 60 nm or more and 450 nm or less, and particularly preferably 70 nm or more and 400 nm or less. In the case where the Z-average particle diameter of the particles of the polymer (A) is within the range described above, a balance between the adhesion to the surface of the active material and the coating properties is achieved, and both the binding ability for maintaining the electrode structure and the reduction in resistance of the electrode can be achieved at a high level.

The Z-average particle diameter of the particles of the polymer (A) can be a value measured by a dynamic light scattering (DLS) method. Examples of the particle size measuring apparatus according to the DLS method include "FPAR-1000" manufactured by Otsuka Electronics Co., Ltd. A cumulant analysis method is used as the analysis method.

The measurement according to the DLS method is performed by using a dispersion of the polymer (A). Since the DLS method may overestimate the measured values due to the influences of trace amounts of coarse particles or foreign matter, the measurement solution is filtered through a filter with a pore size of 1 µm to 3 µm.

### 1.1.2.3. Electrolyte Solution Swelling Rate

A swelling rate (hereinafter also referred to as "electrolyte solution swelling rate") obtained when the polymer (A) is immersed into in a solvent consisting of propylene carbonate and diethyl carbonate at a volume fraction of 1:1 under the conditions of 70°C for 24 hours is preferably 150% or more and 500% or less, more preferably 160% or more and 450% or less, and particularly preferably 170% or more and 400% or less. In the case where the electrolyte solution swelling rate of the polymer (A) is within the range described above, the polymer (A) can swell appropriately by absorbing the electrolyte solution. As a result, solvated lithium ions can reach the active material more readily, so the electrode resistance can be effectively reduced and better charge-discharge properties can be achieved. In addition, when the electrolyte solution swelling rate of the polymer (A) is within the range described above, the polymer (A) exhibits excellent adhesion because no large volume change occurs even after the polymer (A) absorbs the electrolyte solution.

### 1.1.3. Manufacturing Method of Polymer (A)

### <Polymerization Step>

The polymerization step of the polymer (A) is not particularly limited, and can be performed by, for example, an emulsion polymerization process carried out in the presence of a conventional emulsifier, chain transfer agent, polymerization initiator, or the like.

Examples of the emulsifier include anionic surfactants such as sulfate ester salts of higher alcohols, alkylbenzene sulfonates, alkylnaphthalene sulfonates, alkyldiphenyl ether disulfonates, aliphatic sulfonates, aliphatic carboxylates, dehydroabietates, naphthalene sulfonic acid-formalin condensates, and sulfate ester salts of nonionic surfactants; nonionic surfactants such as alkyl esters of polyethylene glycol, alkylphenyl ethers of polyethylene glycol, and alkyl ethers of polyethylene glycol; and fluorine-based surfactants such as perfluorobutyl sulfonates, perfluoroalkyl group-containing phosphate esters, perfluoroalkyl group-containing carboxylates, and perfluoroalkyl ethylene oxide adducts. One or more selected from the above can be used.

As specific examples of the chain transfer agent and the polymerization initiator, compounds described in Japanese Patent No. 5999399 and the like can be used.

The emulsion polymerization method for synthesizing the polymer (A) may be performed by single-stage polymerization or multi-stage polymerization of two or more stages, and is preferably performed by two-stage polymerization.

In the case of performing the synthesis of the polymer (A) by single-stage polymerization, the emulsion polymerization of a mixture of the monomers can be carried out in the presence of an appropriate emulsifier, chain transfer agent, polymerization initiator, or the like, preferably at a temperature of 0°C to 80°C, and preferably for a polymerization time of 4 hours to 36 hours.

In the case of performing the synthesis of the polymer (A) by two-stage polymerization, the polymerization at each stage is preferably set as follows.

The proportion of monomers used in the first stage polymerization is preferably in the range of 40% by mass to 99% by mass, and more preferably in the range of 45% by mass to 99% by mass, relative to the total mass of the monomers (the sum of the mass of the monomers used in the first stage polymerization and the mass of the monomers used in the second stage polymerization). By performing the first stage polymerization with such proportion of monomers, particles of the polymer (A) having excellent dispersion stability and being less prone to aggregation can be obtained, and the increase in viscosity over time of the binder composition for an electric power storage device after coagulation can also be suppressed, which is preferable.

The types of monomers used in the second stage polymerization and the proportions thereof may be the same as or different from the types of monomers used in the first stage polymerization and the proportions thereof.

The polymerization conditions at the respective stages are preferably set as follows from the viewpoint of the dispersibility of the particles of the polymer (A) to be obtained.
· First stage polymerization: preferably a temperature of 0°C to 80°C; preferably a polymerization time of 2 hours to 36 hours; preferably a polymerization conversion rate of 50% by mass or more, more preferably 60% by mass or more.
· Second stage polymerization: preferably a temperature of 0°C to 80°C; preferably a polymerization time of 2 hours to 18 hours.

Regardless of whether the synthesis of the polymer (A) is performed by single-stage polymerization or multi-stage polymerization, a neutralizing agent is preferably added, for neutralization, to the polymerization mixture after the emulsion polymerization is completed. The neutralizing agent used here is not particularly limited, and examples thereof include metal hydroxides such as sodium hydroxide and potassium hydroxide; ammonia; and the like.

### 1.2. Liquid Medium (B)

The binder composition for an electric power storage device according to the embodiment contains the liquid medium (B). The liquid medium (B) is preferably an aqueous medium containing water, and more preferably water. The aqueous medium may contain a non-aqueous medium other than water. Examples of the non-aqueous medium include amide compounds, hydrocarbons, alcohols, ketones, esters, amine compounds, lactones, sulfoxides, and sulfone compounds, and one or more selected from the above can be used. By using an aqueous medium as the liquid medium (B), the binder composition for an electric power storage device according to the embodiment has a reduced degree of adverse impact on the environment and improved safety for handling workers.

The content ratio of the non-aqueous medium contained in the aqueous medium is preferably 10% by mass or less, more preferably 5% by mass or less, and particularly preferably substantially not contained, based on 100% by mass of the aqueous medium. Here, "substantially not contained" means that a non-aqueous medium is not intentionally added as a liquid medium, and a non-aqueous medium that is inevitably mixed in during preparation of the binder composition for an electric power storage device may be contained.

### 1.3. Other Additives

The binder composition for an electric power storage device according to the embodiment may, as needed, contain an additive other than the components described above. Examples of such additive include polymers other than the polymer (A), preservatives, thickeners, and the like.

### <Polymer Other than Polymer (A)>

The binder composition for an electric power storage device according to the embodiment may contain a polymer other than the polymer (A). Examples of such a polymer include, but are not limited to, acrylic polymers containing an unsaturated carboxylic acid ester or a derivative thereof as a structural unit, fluorine-based polymers such as polyvinylidene fluoride (PVDF), and the like. These polymers can be used alone or in combination of two or more. By containing these polymers, flexibility and adhesion may be further improved.

### <Preservative>

The binder composition for an electric power storage device according to the embodiment may contain a preservative. By containing a preservative, it is possible to suppress the growth of bacteria, mold, and the like and the generation of foreign matter during storage of the binder composition for an electric power storage device. Specific examples of the preservative include compounds described in Japanese Patent No. 5477610 and the like.

### <Thickener>

The binder composition for an electric power storage device according to the embodiment may contain a thickener. By containing a thickener, the applicability of the slurry and the charge-discharge properties of the resulting electric power storage device may be further improved.

Examples of the thickener include cellulose-based polymers such as carboxymethyl cellulose, methyl cellulose, ethyl cellulose, and hydroxypropyl cellulose; poly(meth)acrylic acid; ammonium salts or alkali metal salts of the cellulose compound or the poly(meth)acrylic acid; modified polyvinyl alcohol, polyethylene oxide; polyvinylpyrrolidone, polycarboxylic acid, oxidized starch, phosphate starch, casein, various modified starches, chitin, and chitosan derivatives. Among these, cellulose-based polymers are preferable.

Examples of commercially available products of the thickeners include alkali metal salts of carboxymethyl cellulose such as CMC1120, CMC1150, CMC2200, CMC2280, and CMC2450 (all manufactured by Daicel Corporation).

In the case where the binder composition for an electric power storage device according to the embodiment contains a thickener, the content ratio of the thickener is preferably 5 mass% or less, and more preferably 0.1 mass% to 3 mass%, relative to 100 mass% of the total solid content of the binder composition for an electric power storage device.

### 1.4. pH of Binder Composition for Electric Power Storage Device

The pH of the binder composition for an electric power storage device according to the embodiment is preferably 2.5 to 6.5, more preferably 2.7 to 6.2, and further preferably 3.0 to 6.0. When the pH is within the range, it is possible to suppress thickening of the binder for an electric power storage device, insufficient leveling properties, and occurrence of sagging, and it becomes easier to manufacture an electric power storage device electrode that achieves both favorable electrical properties and adhesion.

The "pH" in the present specification refers to a physical property measured as follows. The pH is a value measured at 25°C using a pH meter equipped with a glass electrode calibrated with a neutral phosphate standard solution and a borate standard solution as pH standard solutions, in accordance with JIS Z8802:2011. Examples of such pH meter include "HM-7J" manufactured by DKK-TOA Corporation and "D-51" manufactured by Horiba, Ltd.

While it is not denied that the pH of the binder composition for an electric power storage device is influenced by the monomer composition forming the polymer (A), but the PH is not determined solely by the monomer composition. That is, it is known that the pH of the binder composition for an electric power storage device generally varies depending on the polymerization condition and the like even with the same monomer composition, and the examples in the present specification merely illustrate one example thereof.

### 2. Slurry for Electric Power Storage Device

A slurry for an electric power storage device according to an embodiment of the invention contains the binder composition for an electric power storage device described above. The binder composition for an electric power storage device described above can be used as a material for manufacturing a protective film for suppressing a short circuit caused by dendrites generated through charging and discharging, and can also be used as a material for manufacturing an electric power storage device electrode (active material layer) with an improved binding ability between active materials, adhesion ability between the active material layer and a current collector, and powder fall-off resistance. Hereinafter, a slurry for an electric power storage device for manufacturing a protective film (hereinafter also referred to as "slurry for a protective film") and a slurry for an electric power storage device for manufacturing an active material layer of an electric power storage device electrode (hereinafter also referred to as "slurry for an electric power storage device electrode") will be described separately.

### 2.1 Slurry for Protective Film

The "slurry for a protective film" refers to a dispersion used for manufacturing a protective film on a surface of an electrode or a separator, or both, by applying the dispersion to the surface of the electrode or the separator, or both, and then drying the dispersion. The slurry for an protective film according to the embodiment may be formed by the binder composition for an electric power storage device described above alone, or may further contain an inorganic filler. Examples of the inorganic filler include inorganic fillers described in Japanese Patent Application Laid-Open Publication No. 2020-184461.

### 2.2 Slurry for Electric Power Storage Device Electrode

The "slurry for an electric power storage device electrode" refers to a dispersion used for manufacturing an active material layer on a surface of a current collector by applying the dispersion to the surface of the current collector and then drying the dispersion. The slurry for an electric power storage device electrode according to the embodiment contains the binder composition for an electric power storage device described above and an active material.

In general, a slurry for an electric power storage device electrode often contains a binder component such as an SBR-based polymer and a thickener such as carboxymethyl cellulose in order to improve adhesion. On the other hand, the slurry for an electric power storage device electrode according to the embodiment may improve adhesion even in the case where the slurry contains only the polymer (A) described above as a polymer component. Of course, the slurry for an electric power storage device electrode according to the embodiment may further contain a polymer other than the polymer (A) and a thickener in order to further improve adhesion. Hereinafter, the components that may be contained in the slurry for an electric power storage device electrode according to the embodiment will be described.

### 2.2.1. Polymer (A)

The composition, physical properties, manufacturing method, and the like of the polymer (A) are as described above, and thus the description thereof will be omitted.

The content ratio of the polymer component in the slurry for an electric power storage device electrode according to the embodiment is preferably 1 parts by mass to 8 parts by mass, more preferably 1 part by mass to 7 parts by mass, and particularly preferably 1.5 parts by mass to 6 parts by mass, relative to 100 parts by mass of the active material. When the content ratio of the polymer component is within the range, the dispersibility of the active material in the slurry becomes favorable, and the applicability of the slurry also excels. Here, the polymer component includes the polymer (A), a polymer other than the polymer (A) added as needed, a thickener, and the like.

### 2.2.2. Active Material

Examples of the active material used in the slurry for an electric power storage device electrode according to the embodiment include a positive electrode active material and a negative electrode active material. Specific examples thereof include carbon materials, silicon materials, oxides containing lithium atoms, sulfur compounds, lead compounds, tin compounds, arsenic compounds, antimony compounds, aluminum compounds, conductive polymers such as polyacene, composite metal oxides A_{X}B_{Y}O_{Z} (where A is an alkali metal or a transition metal, B is at least one selected from transition metals such as cobalt, nickel, aluminum, tin, and manganese, O represents an oxygen atom, and X, Y, and Z are numbers in the ranges of 1.10>X>0.05, 4.00>Y>0.85, and 5.00>Z>1.5, respectively), and other metal oxides. Specific examples thereof include compounds described in Japanese Patent No. 5999399 and the like.

The slurry for an electric power storage device electrode according to the embodiment can be used in manufacturing either a positive electrode or a negative electrode, and is preferably used for a negative electrode.

In the case of manufacturing a negative electrode, among the active materials exemplified above, those containing a silicon material and/or a carbon material are preferable, and a mixture of a silicon material and a carbon material is more preferable. The silicon material has a larger amount of lithium occlusion per unit weight than other active materials, so the electric storage capacity of the resulting electric power storage device can be increased. As a result, the output and energy density of the electric power storage device can be increased. On the other hand, since the volume change of the carbon material through charging and discharging is smaller than that of the silicon material, by using a mixture of a silicon material and a carbon material as the negative electrode active material, the influence of the volume change of the silicon material can be mitigated, and the adhesion ability between the active material layer and the current collector can be further improved.

In the case of using silicon (Si) as an active material, silicon has a high capacity, but generates a large volume change in occluding lithium ions. For this reason, the silicon material is pulverized by repeated expansion and contraction, causing peeling from the current collector and separation between active materials, and the conductive network inside the active material layer tends to be disrupted. Due to this property, the charge-discharge durability properties of the electric power storage device deteriorate extremely in a short period of time.

In this regard, the electric power storage device electrode manufactured using the slurry for an electric power storage device electrode according to the embodiment can exhibit favorable electrical properties without the issues described above occurring even in the case where a silicon material is used. The reason for this is considered to be that the polymer (A) can firmly bind the silicon material, and at the same time, the polymer (A) can stretch and contract to maintain a state in which the silicon material is firmly bound even if the silicon material undergoes volume expansion due to occlusion of lithium.

The content ratio of the silicon material in 100 mass% of the active material is preferably 1 mass% or more, more preferably 2 mass% to 50 mass%, further preferably 3 mass% to 45 mass%, and particularly preferably 10 mass% to 40 mass%. When the content ratio of the silicon material in 100 mass% of the active material is within the aforementioned range, an electric power storage device having an excellent balance between improvement in output and energy density of the electric power storage device and charge-discharge durability properties can be obtained.

The shape of the negative electrode active material is preferably in the form of particle. The average particle diameter of the negative electrode active material is preferably 0.1 µm to 100 µm, and more preferably 1 µm to 20 µm.

On the other hand, in the case of manufacturing a positive electrode, among the active materials exemplified above, an oxide containing lithium atoms is preferable. Examples of the oxide containing lithium atoms include one or more selected from lithium manganate, lithium nickelate, lithium cobaltate, and lithium manganese nickel cobaltate, represented by Formula (1) as follows.

Li₁₋ₓMₓ(AO₄) (1)

(In Formula (1), M is at least one metal ion selected from the group consisting of Mg, Ti, V, Nb, Ta, Cr, Mn, Fe, Co, Ni, Cu, Zn, Al, Ga, Ge, and Sn; A is at least one selected from the group consisting of Si, S, P, and V; and x is a number satisfying the relationship 0<x<1.)
The value of x in Formula (1) is selected in accordance with the valences of M and A, so that the overall valence of Formula (1) becomes zero.

Examples of the olivine-type lithium-containing phosphate compound include LiFePO₄, LiCoPO₄, LiMnPO₄, Li_{0.90}Ti_{0.05}Nb_{0.05}Fe_{0.30}Co_{0.30}Mn_{0.30}PO₄, and the like. Among these, LiFePO₄ (lithium iron phosphate) is preferable in that iron compounds used as raw materials are readily available and inexpensive.

The average particle diameter of the olivine-type lithium-containing phosphate compound is preferably in the range of 1 µm to 30 µm, more preferably in the range of 1 µm to 25 µm, and particularly preferably in the range of 1 µm to 20 µm.

The active material layer may also contain an active material exemplified below. Examples include conductive polymers such as polyacene; composite metal oxides represented by A_{X}B_{Y}O_{Z} (where A is an alkali metal or transition metal, B is at least one selected from transition metals such as cobalt, nickel, aluminum, tin, and manganese, O represents an oxygen atom, and X, Y, and Z are numbers in the ranges of 1.10>X>0.05, 4.00>Y>0.85, and 5.00>Z>1.5, respectively); and other metal oxides.

Examples of the composite metal oxide include lithium cobaltate, lithium nickelate, lithium manganate, and ternary lithium nickel cobalt manganate.

An electric power storage device electrode manufactured using the slurry for an electric power storage device electrode according to the embodiment can exhibit favorable electrical properties even in a case where an oxide containing lithium atoms is used as a positive electrode active material. This is considered to be because a polymer (A) is capable of firmly binding the oxide containing lithium atoms while maintaining the firmly bound state of the oxide containing lithium atoms during charging and discharging.

### 2.2.3. Other Components

In addition to the components described above, components such as a polymer other than the polymer (A), a thickener, a liquid medium, a conductive aid, a pH adjuster, a corrosion inhibitor, an antioxidant, and cellulose fiber may be added to the slurry for an electric power storage device electrode according to the embodiment, as needed. As the polymer other than the polymer (A) and the thickener, compounds appropriately selected from those exemplified in the section "1.3. Other Additives" above can be used for the same purposes and at the same content ratios.

### <Liquid Medium>

In addition to the amount brought in from the binder composition for an electric power storage device, a liquid medium may further be added to the slurry for an electric power storage device electrode according to the embodiment. The liquid medium to be added may be the same as or different from the liquid medium (B) contained in the binder composition for an electric power storage device, but is preferably selected from the liquid mediums exemplified in the section "1.2. Liquid Medium (B)" above.

The content ratio of the liquid medium (including the amount brought in from the binder composition for an electric power storage device) in the slurry for an electric power storage device electrode according to the embodiment is preferably set such that the solid content concentration in the slurry (referring to the ratio of the total mass of components other than the liquid medium in the slurry to the total mass of the slurry; the same applies hereinafter) is 30 mass% to 70 mass%, and more preferably 40 mass% to 60 mass%.

### <Conductive Aid>

A conductive aid may further be added to the slurry for an electric power storage device electrode according to the embodiment for the purpose of imparting conductivity and buffering the volume change of the active material due to the entry and exit of lithium ions.

Specific examples of the conductive aid include carbons such as activated carbon, acetylene black, Ketjenblack, furnace black, graphite, carbon fiber, fullerene, and carbon nanotube. Among these, acetylene black, Ketjenblack, or carbon nanotube may be preferably used. The content ratio of the conductive aid is preferably 20 parts by mass or less, more preferably 1 part by mass to 15 parts by mass, and particularly preferably 2 parts by mass to 10 parts by mass, relative to 100 parts by mass of the active material.

### <pH Adjuster>

A pH adjuster may further be added to the slurry for an electric power storage device electrode according to the embodiment for the purpose of suppressing the corrosion of the current collector, according to the type of active material.

Examples of the pH adjuster include hydrochloric acid, phosphoric acid, sulfuric acid, acetic acid, formic acid, ammonium phosphate, ammonium sulfate, ammonium acetate, ammonium formate, ammonium chloride, sodium hydroxide, and potassium hydroxide. Among these, sulfuric acid, ammonium sulfate, sodium hydroxide, and potassium hydroxide are preferable. In addition, a neutralizing agent selected from those described in the manufacturing method of the polymer (A) can also be used.

### <Corrosion Inhibitor>

A corrosion inhibitor may further be added to the slurry for an electric power storage device electrode according to the embodiment for the purpose of suppressing corrosion of the current collector, according to the type of active material.

Examples of the corrosion inhibitor include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, and potassium molybdate, and among these, ammonium paratungstate, ammonium metavanadate, sodium metavanadate, potassium metavanadate, and ammonium molybdate are preferable.

### <Cellulose Fiber>

Cellulose fibers may further be added to the slurry for an electric power storage device electrode according to the embodiment. A known cellulose fiber can be used as the cellulose fiber. In some cases, adding the cellulose fiber can improve the adhesion of the active material to the current collector. It is considered that the fibrous cellulose fiber fibrous-binds adjacent active materials to each other by line bonding or line contact, thereby preventing the active material from falling off and improving the adhesion to the current collector.

### 2.2.4. Method for Preparing Slurry for Electric Power Storage Device Electrode

The slurry for an electric power storage device electrode according to the embodiment may be manufactured by any method as long as the slurry contains the binder composition for an electric power storage device and the active material described above. From the viewpoint of manufacturing a slurry having higher dispersibility and stability more efficiently and at lower cost, it is preferable to manufacture the slurry by adding the active material and optional additive components used as needed to the binder composition for an electric power storage device and mixing the materials. Specific examples of the manufacturing method, for example, include a method described in Japanese Patent No. 5999399.

### 3. Electric Power Storage Device Electrode

An electric power storage device electrode according to an embodiment of the invention includes a current collector and an active material layer formed by applying and drying the slurry for an electric power storage device electrode described above on a surface of the current collector. Such electric power storage device electrode may be manufactured by applying the slurry for an electric power storage device electrode described above to the surface of a current collector such as a metal foil to form a coating film, and then drying the coating film to form an active material layer. The electric power storage device electrode manufactured in this manner has the active material layer containing the polymer (A) described above, the active material, and optional components added as needed, bound to the surface of the current collector, and therefore excels in adhesion and suppresses the expansion of the electrode through repeated charging and discharging, resulting in excellent charge-discharge durability properties.

The current collector is not particularly limited as long as it is made of a conductive material, and examples thereof include current collectors described in Japanese Patent No. 5999399.

In the electric power storage device electrode according to the embodiment, in the case of using a silicon material as the active material, the content ratio of the silicon element in 100 mass% of the active material layer is preferably 1 mass% to 30 mass%, more preferably 2 mass% to 20 mass%, and particularly preferably 3 mass% to 10 mass%. In the case where the content ratio of the silicon element in the active material layer is within the range described above, the electric power storage capacity of the electric power storage device manufactured using the same is improved, and an active material layer having a uniform distribution of silicon element is obtained. The content of the silicon element in the active material layer may be measured by, for example, a method described in Japanese Patent No. 5999399.

### 4. Electric Power Storage Device

An electric power storage device according to an embodiment of the invention includes the electric power storage device electrode described above, further contains an electrolyte solution, and may be manufactured according to a conventional method using components such as a separator. Examples of the specific manufacturing method, for example, include a method in which a negative electrode and a positive electrode are stacked with a separator interposed therebetween, wound or folded according to the shape of the battery, housed in a battery container, and the electrolyte solution is injected into the battery container and sealed. The shape of the battery can be an appropriate shape such as a coin type, a cylindrical type, a prismatic type, or a laminate type.

The electrolyte solution may be in a liquid state or a gel state, and may be selected from known electrolyte solutions used in electric power storage devices according to the type of active material, so as to effectively exhibit the function as a battery. The electrolyte solution may be a solution in which an electrolyte is dissolved in an appropriate solvent. Examples of such electrolytes and solvents include compounds described in Japanese Patent No. 5999399.

The electric power storage device described above is applicable to lithium-ion secondary batteries, electric double-layer capacitors, lithium-ion capacitors, and the like that require discharge at a high current density. Among these, lithium-ion secondary batteries are particularly preferable. In the electric power storage device electrode and the electric power storage device according to the embodiment, members other than the binder composition for an electric power storage device may be members for lithium-ion secondary batteries, electric double-layer capacitors, or lithium-ion capacitors that are conventional.

### 5. Examples

Hereinafter, the invention will be specifically described based on examples, but the invention is not limited to these examples. "Parts" and "%" in the examples and comparative examples are based on mass unless otherwise specified.

### 5.1 Example 1

### 5.1.1. Preparation of Binder Composition for an Electric Power Storage Device

### <Example 1>

A binder composition for an electric power storage device containing the polymer (A1) was obtained by two-stage polymerization as described below. A reactor was charged with 300 parts by mass of water, a monomer mixture formed of 35 parts by mass of 1,3-butadiene, 12 parts by mass of styrene, 23 parts by mass of acrylonitrile, 2 parts by mass of acrylic acid, and 3 parts by mass of methyl methacrylate, 0.1 parts by mass of tert-dodecyl mercaptan as a chain transfer agent, 0.1 parts by mass of sodium alkyldiphenyl ether disulfonate as an emulsifier, and 1.0 parts by mass of potassium persulfate as a polymerization initiator, and polymerization was carried out at 70°C for 18 hours with stirring, after which a polymerization conversion rate of 95% was confirmed. Subsequently, 50 parts by mass of water, 4 parts by mass of acrylic acid, 4 parts by mass of methacrylic acid, 2 parts by mass of acrylonitrile, and 15 parts by mass of 1,3-butadiene were further added to the reactor, and polymerization was carried out at 75°C for 12 hours, after which a polymerization conversion rate of 98% was confirmed. Unreacted monomers were removed from the particle dispersion of the polymer (A1) thus obtained and the dispersion was concentrated, a 5% aqueous sodium hydroxide solution was added, and then moisture was removed by using an evaporator, thereby obtaining a binder composition for an electric power storage device containing particles of the polymer (A1) having a solid content concentration of 40% by mass and a pH of 6.0.

### 5.1.2. Physical Property Evaluation of Binder Composition for Electric Power Storage Device

### <Measurement Method of Polymerization Conversion Rate>

The polymerization conversion rate in the synthesis of the polymer described above was measured as follows.

A reaction solution that had been polymerized for a predetermined period of time was extracted and placed into an aluminum dish (X (g)) whose weight had been measured in advance, and the weight (Y (g)) of the reaction solution was measured. The reaction solution was dried at 155°C for 15 minutes using a hot air dryer. The aluminum dish was taken out and, after cooling, the weight (Z (g)) of the aluminum dish was measured. The polymerization conversion rate (%) was calculated from the values of weights X, Y, and Z measured in this manner using the following formula (2). $Polymerization conversion rate \left(%\right) = \left(\left(Z-X\right)/Y\right) \times 100$

### <Content of N Element Component Eluting into Water>

0.30 g in terms of solid content of the polymer (A1) obtained above was placed in a petri dish having a diameter of 5 cm, and a film of 0.30 g obtained by drying in a thermostatic chamber at 130°C for 30 minutes was cut into 5 mm widths. All fragments of the obtained film were immersed in 30 mL of a sodium hydroxide aqueous solution (0.01 M) at pH 12, and stirred in a warm water bath at 65°C for 2 hours. After stirring, the components eluting into the aqueous layer were separated and dried to a dry solid, and a ratio (N_{B}/N_{A}) was determined, where N_{B} represents the content of the N element component contained in the dry solid and N_{A} represents the content of the N element component contained in the polymer (A1). The results are shown in Table 1 below.

The elemental analysis was performed by the following method. Using "SUMIGRAPH (registered trademark) NC-TRINITY" (total nitrogen/total carbon measuring apparatus) manufactured by Sumika Chemical Analysis Service, Ltd., approximately 100 mg each of the polymer (A1) and the dry solid were weighed, and the content of the N element component contained in each sample was obtained by a combustion method/improved Dumas method. Subsequently, the content was converted to a bound acrylonitrile amount based on the molecular weights of the N element and acrylonitrile, and the value of (N_{B}/N_{A}) was determined.

Further, a ratio (C/Cₐ₁) between C and a content Cₐ₁ of the repeating unit (a1) derived from an unsaturated carboxylic acid was determined, where C represents the content of the components eluting into the aqueous layer. The results are shown in Table 1 below.

### <Measurement of Z-Average Particle Diameter>

The Z-average particle diameter of particles of the polymer (A1) was measured by using a dynamic light scattering method. Specifically, first, the binder composition for an electric power storage device obtained above was irradiated with laser light, and the scattered light intensity scattered from the particles of the polymer (A1) was measured as the temporal variation in the units of microseconds. Then, the Z-average particle diameter of the polymer (A1) was determined by a cumulant analysis method for calculating the average particle diameter by fitting the light intensity distribution of the scattered light attributed to the detected particles of the polymer (A1) to a normal distribution. For the measurement of the Z-average particle diameter, a concentrated system particle size analyzer ("FPAR-1000", manufactured by Otsuka Electronics Co., Ltd.) was used. The particle size measuring apparatus is equipped with data analysis software, and the Z-average particle diameter can be calculated by the data analysis software automatically analyzing the measurement data. The results are shown in Table 1 below.

### <Measurement of Electrolyte Solution Swelling Rate>

The polymer (A1) obtained above was dried in a thermostatic chamber at 85°C for 24 hours to prepare a film. 1 g of the film was immersed in 20 mL of a mixed liquid formed of propylene carbonate (PC) and diethyl carbonate (DEC) (PC/DEC=1/1 (volume ratio), hereinafter, the mixed liquid is referred to as "PC/DEC") used as an electrolyte solution in the manufacture of an electric power storage device described later, and shaken at 70°C for 24 hours. Subsequently, the mixture was filtered through a 300-mesh wire gauze to separate the insoluble fraction, and then the weight (Y (g)) of the residue obtained by evaporating and removing the dissolved PC/DEC was measured. Further, after the PC/DEC adhering to the surface of the insoluble fraction (film) separated by the filtration above was absorbed and removed with paper, the weight (Z (g)) of the insoluble fraction (film) was measured. The electrolyte solution swelling rate was measured by the following formula (3), and the electrolyte solution swelling rate of the polymer (A1) was 240%. The results are shown in Table 1 below. $Electrolyte solution swelling rate \left(%\right) = \left(Z/\left(1-Y\right)\right) \times 100$

### 5.1.3. Preparation of Slurry for an Electric Power Storage Device Electrode

### <Synthesis of Silicon Material (Active Material)>

A mixture of a pulverized silicon dioxide powder (average particle diameter: 10 µm) and carbon powder (average particle diameter: 35 µm) was subjected to a heat treatment for 10 hours in an electric furnace with a temperature adjusted in a range of 1100°C to 1600°C under a nitrogen gas flow (0.5 NL/min), to obtain a powder (average particle diameter: 8 µm) of silicon oxide represented by a compositional formula SiOₓ (x=0.5 to 1.1). 300 g of the silicon oxide powder was charged into a batch-type heating furnace, and the temperature was raised from room temperature (25°C) to 1100°C at a temperature increase rate of 300°C/h while maintaining a reduced pressure of 100 Pa in absolute pressure using a vacuum pump. Subsequently, a heat treatment (graphite coating treatment) was performed at 1100°C for 5 hours while introducing methane gas at a flow rate of 0.5 NL/min while maintaining the pressure in the heating furnace at 2000 Pa. After completion of the graphite coating treatment, the mixture was cooled to room temperature at a temperature decrease rate of 50°C/h, thereby obtaining approximately 330 g of graphite-coated silicon oxide powder. The graphite-coated silicon oxide is a conductive powder (active material) in which the surface of silicon oxide is coated with graphite, and has an average particle diameter of 10.5 µm, and the ratio of the graphite coating was 2 mass% in the case where the total of the obtained graphite-coated silicon oxide was taken as 100 mass%.

### <Preparation of Slurry for Electric Power Storage Device Electrode>

Into a biaxial planetary mixer (manufactured by PRIMIX Corporation, trade name "TK HIVIS MIX 2P-03"), 1 part by mass (solid content equivalent value, added as an aqueous solution at a concentration of 2 mass%) of a thickener (trade name "CMC2200", manufactured by Daicel Corporation), 4 parts by mass (solid content equivalent value, added as the binder composition for an electric power storage device obtained above) of the polymer (A1), 85.5 parts by mass (solid content equivalent value) of artificial graphite (manufactured by Resonac Corporation, trade name "MAG"), which is highly crystalline graphite as a negative electrode active material, 9.5 parts by mass (solid content equivalent value) of the graphite-coated silicon oxide powder obtained above, and 1 part by mass of carbon (manufactured by Denka Company Limited, acetylene black) as a conductivity-imparting agent were added, and the mixture was stirred at 60 rpm for 1 hour to obtain a paste. Water was added to the obtained paste, and after adjusting the solid content concentration to 48 mass%, the paste was stirred and mixed using a stirring defoamer (manufactured by Thinky Corporation, trade name " Awatori Rentaro ") at 200 rpm for 2 minutes, at 1800 rpm for 5 minutes, and further at 1800 rpm for 1.5 minutes under a reduced pressure (approximately 2.5×10⁴ Pa), thereby preparing a slurry for an electric power storage device electrode (C/Si=90/10) containing 10 mass% of Si in the negative electrode active material.

### 5.1.4. Manufacture and Evaluation of Electric Power Storage Device

### <Manufacture of Electric Power Storage Device Electrode (Negative Electrode)>

The slurry for an electric power storage device electrode (C/Si=90/10) obtained above was uniformly applied by a doctor blade method onto the surface of a current collector made of a copper foil having a thickness of 20 µm so that the film thickness after drying was 80 µm, dried at 80°C for 5 minutes, and then subjected to a drying treatment at 120°C for 5 minutes. Thereafter, press processing was performed using a roll press machine such that the density of the active material layer was 1.6 g/cm³, thereby obtaining an electric power storage device electrode (negative electrode).

### <Evaluation of Adhesion Strength of Negative Electrode Coating Layer>

On the surface of the electric power storage device electrode obtained above, a knife was used to make cuts at 2 mm intervals, with 10 cuts each in the vertical and horizontal directions, reaching from the active material layer to a depth reaching the current collector, thereby creating a crosscut pattern. An adhesive tape having a width of 18 mm (manufactured by Nichiban Co., Ltd., trade name "Cellotape" (registered trademark), specified in JIS Z1522) was applied to the cuts and immediately peeled off, and the degree of detachment of the active material was evaluated by visual inspection. The evaluation criteria are as follows. The results are shown in Table 1 below.

### (Evaluation Criteria)

- 5 points: The number of active material layer detachments is 0.
- 4 points: The number of active material layer detachments is 1 to 5.
- 3 points: The number of active material layer detachments is 6 to 20.
- 2 points: The number of active material layer detachments is 21 to 40.
- 1 point: The number of active material layer detachments is 41 or more.

### <Manufacturing of Counter Electrode (Positive Electrode)>

Into a biaxial planetary mixer (manufactured by PRIMIX Corporation, trade name "TK HIVIS MIX 2P-03"), 4 parts by mass (in terms of solid content) of a binder for electrochemical device electrodes (manufactured by Kureha Corporation, trade name "KF Polymer #1120"), 3.0 parts by mass of a conductive aid (manufactured by Denka Company Limited, trade name "Denka Black 50% Press"), 100 parts by mass (in terms of solid content) of LiCoO₂ (manufactured by Hayashi Kasei Co., Ltd.) having an average particle diameter of 5 µm as a positive electrode active material, and 36 parts by mass of N-methylpyrrolidone (NMP) were charged, and stirring was performed at 60 rpm for 2 hours. NMP was added to the obtained paste to adjust the solid content concentration to 65% by mass, and then, using a stirring defoamer (manufactured by Thinky Corporation, trade name "Awatori Rentaro"), stirring and mixing were performed at 200 rpm for 2 minutes, at 1800 rpm for 5 minutes, and further at 1800 rpm for 1.5 minutes under a reduced pressure (approximately 2.5×10⁴ Pa), thereby preparing a slurry for a positive electrode. The slurry for a positive electrode was uniformly applied by a doctor blade method onto a surface of a current collector made of aluminum foil so that a film thickness after solvent removal was 80 µm, and heated at 120°C for 20 minutes to remove the solvent. Thereafter, press processing was performed by a roll press machine so that the density of the active material layer was 3.0 g/cm³, thereby obtaining a counter electrode (positive electrode).

### <Assembly of Lithium-Ion Battery Cell>

In a glove box substituted with Ar so that a dew point was -80°C or lower, a negative electrode manufactured as described above was punched into a shape having a diameter of 16.16 mm and placed on a bipolar coin cell (manufactured by Hohsen Corp., trade name "HS Flat Cell"). Subsequently, a separator made of a polypropylene porous membrane punched to a diameter of 24 mm (manufactured by Celgard LLC, trade name "Celgard #2400") was placed thereon, and further, 300 µL of an electrolyte solution was injected so that no air entered, after which the positive electrode manufactured as described above was punched into a shape having a diameter of 15.95 mm and placed thereon, and an outer body of the bipolar coin cell was closed and sealed with screws, thereby assembling a lithium-ion battery cell (electric power storage device). The electrolyte solution used here is a solution in which LiPF₆ was dissolved at a concentration of 1 mol/L in a solvent of ethylene carbonate/ethyl methyl carbonate = 1/1 (mass ratio).

### <Evaluation of Resistance Increase Rate>

The electric power storage device manufactured as described above was placed in a thermostatic chamber at 25°C, charging was started at a constant current (1.0C), and in response to the voltage reaching 4.2 V, charging was continued at a constant voltage (4.2 V), and the point at which the current value reached 0.01C was defined as the completion of charging (cutoff). Thereafter, discharging was started at a constant current (0.05C), the point at which the voltage reached 3.0 V was defined as the completion of discharging (cutoff), and the discharge capacity at the 0^{th} cycle was calculated. Furthermore, charging was started at a constant current (1.0C), and in response to the voltage reaching 4.2 V, charging was continued at a constant voltage (4.2 V), and the point at which the current value reached 0.01C was defined as the completion of charging (cutoff). Thereafter, discharging was started at a constant current (1.0C), the point at which the voltage reached 3.0 V was defined as the completion of discharging (cutoff), and the discharge capacity at the 1^{st} cycle was calculated. Charging and discharging were repeated 100 times in this manner. After repeating charging and discharging 100 times, charging and discharging were performed in the same manner as the 0^{th} cycle, the discharge capacity at the 101^{st} time was evaluated, the resistance increase rate was calculated by Formula (4) as follows, and the evaluation was performed according to the following criteria. The results are shown in Table 1 below. $\begin{matrix}Resistance Increase Rate \left(%\right) \\ = \left(Discharge capacity at {101}^{st} cycle-Discharge capacity at {100}^{th} cycle\right) / \left(\begin{matrix}Discharge capacity at \\ {0}^{th} cycle - Discharge capacity at {1}^{st} cycle\end{matrix}\right) \times 100\end{matrix}$

### (Evaluation Criteria)

- 5 points: Resistance increase rate is 100% or more and less than 150%.
- 4 points: Resistance increase rate is 150% or more and less than 200%.
- 3 points: Resistance increase rate is 200% or more and less than 250%.
- 2 points: Resistance increase rate is 250% or more and less than 300%.
- 1 point: Resistance increase rate is 300% or more and less than 350%.
- 0 points: Resistance increase rate is 350% or more.

### <Evaluation of Cycle Properties>

For the lithium-ion secondary battery manufactured as described above, charging was started at a constant current (1.0C) in a thermostatic chamber adjusted to 45°C and was continued at a constant voltage (4.2V) in response to the voltage reaching 4.2 V, and the point at which the current value reached 0.01C was defined as the completion of charging (cutoff). Thereafter, discharging was started at a constant current (1.0C), the point at which the voltage reached 2.5V was defined as the completion of discharging (cutoff), and the discharge capacity of the first cycle was calculated. In this manner, charge-discharge was repeated 100 times. The capacity retention rate was calculated by Formula (5) as follows and evaluated according to the following criteria. The results are shown in Table 1 below. $\begin{matrix}Capacity retention rate \left(%\right) \\ = \left(Discharge capacity at 100th cycle/Discharge capacity at 1st cycle\right) \times 100\end{matrix}$

### (Evaluation Criteria)

- 5 points: Capacity retention rate is 95% or more.
- 4 points: Capacity retention rate is 90% or more and less than 95%.
- 3 points: Capacity retention rate is 85% or more and less than 90%.
- 2 points: Capacity retention rate is 80% or more and less than 85%.
- 1 point: Capacity retention rate is 75% or more and less than 80%.
- 0 points: Capacity retention rate is less than 75%.

### <Evaluation of Electrode Plate Expansion Rate>

The film thickness of the negative electrode manufactured above was measured and used as the initial film thickness. For the electric power storage device manufactured above, charging was started at a constant current (0.2C) in a thermostatic chamber adjusted to 25°C, and in response to the voltage reaching 4.2V, charging was continued at a constant voltage (4.2V), and the point at which the current value reached 0.01C was defined as the completion of charging (cutoff). Thereafter, discharging was started at a constant current (0.2C) in a thermostatic chamber adjusted to 25°C, and the point at which the voltage reached 2.5V was defined as the completion of discharging (cutoff), thereby completing the formation charge-discharge. Thereafter, a contact sensor (manufactured by Keyence Corporation, product name "GT2-H12KLF") was attached to the electric power storage device, and the film thickness at that point was used as the film thickness after formation. Then, charging was started at a constant current (0.2C), and in response to the voltage reaching 4.2V, charging was continued at a constant voltage (4.2V), and the point at which the current value reached 0.01C was defined as the completion of charging (cutoff). Thereafter, discharging was started at a constant current (0.2C) in a thermostatic chamber adjusted to 25°C, and the point at which the voltage reached 2.5V was defined as the completion of discharging (cutoff), and by measuring the film thickness at the time of the 10^{th} cycle discharge, the electrode plate expansion rate was calculated according to Formula (6) as follows and evaluated based on the following criteria. The results are shown in Table 1 below. 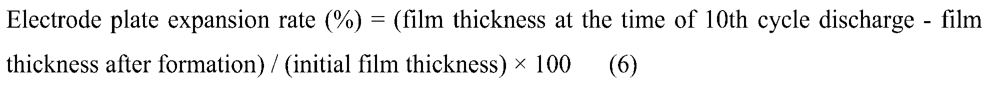 Electrode plate expansion rate (%) = (film thickness at the time of 10th cycle discharge - film thickness after formation) / (initial film thickness) × 100

### (Evaluation Criteria)

- 5 points: Electrode plate expansion rate is 40% or less.
- 4 points: Electrode plate expansion rate is more than 40% and 43% or less.
- 3 points: Electrode plate expansion rate is more than 43% and 46% or less.
- 2 points: Electrode plate expansion rate is more than 46% and 50% or less.
- 1 point: Electrode plate expansion rate is more than 50%.

### <Bubble Breaking Test>

30 g of the slurry for an electric power storage device electrode (C/Si=90/10) obtained above was placed at the bottom of a 1000 mL graduated cylinder, and after sealing the top, the pressure was reduced stepwise according to a predetermined pressure program using a vacuum pump (40 MPa, 35 MPa, 30 MPa, held at each pressure for 5 minutes). Next, at 30 MPa, the maximum height of the slurry interface of the slurry for an electric power storage device electrode that rose along the wall of the graduated cylinder due to foaming, and the height of the slurry interface that decreased due to bubble breaking after 5 minutes were read, and each read value was divided by the initial slurry interface height, and evaluation was performed based on the following criteria. The results are shown in Table 1 below. Slurry bubble breaking rate (%) = 100 - 100 × ((height of slurry interface after 5 minutes of pressure reduction (bubble breaking) / height of slurry interface at initial (normal pressure)) / (maximum value of risen slurry interface height (foaming) / height of slurry interface at initial (normal pressure)))

### (Evaluation Criteria)

- 5 points: Slurry bubble breaking rate is more than 50%.
- 4 points: Slurry bubble breaking rate is 50% or less and more than 45%.
- 3 points: Slurry bubble breaking rate is 45% or less and more than 40%.
- 2 points: Slurry bubble breaking rate is 40% or less and more than 35%.
- 1 point: Slurry bubble breaking rate is 35% or less.

### 5.2. Examples 2 to 12, Comparative Examples 1 to 5

In Examples 2 to 12 and Comparative Examples 1 to 5, the types and amounts of monomers were as described in Table 1 to Table 2 below, and each polymer was synthesized through two-stage polymerization in the same manner as in Example 1 to obtain each binder composition for an electric power storage device, and all other procedures were carried out in the same manner as in Example 1.

### 5.3. Evaluation Results

Table 1 to Table 2 below show the polymer compositions, physical property measurement results, and evaluation results for Examples 1 to 12 and Comparative Examples 1 to 5. The numerical values representing the polymer compositions shown in Table 1 to Table 2 below represent parts by mass.

**[Table 1]**

| | | Monomer | Example 1 | Example 2 | Example 3 | Example 4 | Example 5 | Example 6 | Example 7 | Example 8 | Example 9 |
|---|---|---|---|---|---|---|---|---|---|---|---|
| | | | Polymer (A1) | Polymer (A2) | Polymer (A3) | Polymer (A4) | Polymer (A5) | Polymer (A6) | Polymer (A7) | Polymer (A8) | Polymer (A9) |
| Composition of Polymer (A) (First stage) | Unsaturated carboxylic acid (a1) | TA | | | | | | | | | |
| | | AA | 2 | 2 | 2 | 3 | 4 | 2 | 4 | 1 | |
| | | MAA | | | 3 | 4 | 3 | | 3 | | |
| | α,β-unsaturated nitrile compound (a2) | AN | 23 | 20 | 25 | 15 | 30 | 10 | 8 | 5 | 5 |
| | Conjugated diene compound (a3) | BD | 35 | 45 | 20 | 20 | 45 | 50 | 45 | 45 | 50 |
| | Unsaturated carboxylic acid ester (a4) | MMA | 3 | 3 | | | 2 | 3 | 2 | 3 | 3 |
| | | CHMA | | 1 | | | | 1 | 1 | 1 | 1 |
| | | EDMA | | 1 | | | | 1 | | 1 | 1 |
| | Aromatic vinyl compound (a5) | ST | 12 | 15 | 3 | 5 | 5 | 15 | 12 | 10 | 10 |
| | First-stage ratio | | 75 | 87 | 53 | 47 | 89 | 82 | 75 | 66 | 70 |
| Composition of Polymer (A) (Second stage) | Unsaturated carboxylic acid (a1) | TA | | | 2 | | | | | | |
| | | AA | 4 | | 10 | 20 | 1 | 4 | 4 | 4 | 3 |
| | | MAA | 4 | | 8 | 8 | | 4 | 6 | 4 | |
| | α,β-unsaturated nitrile compound (a2) | AN | 2 | 5 | 5 | | 5 | 2 | | 20 | 25 |
| | Conjugated diene compound (a3) | BD | 15 | 5 | 15 | 18 | 5 | 5 | 10 | 3 | |
| | Unsaturated carboxylic acid ester (a4) | MMA | | | 2 | 2 | | | | | |
| | | CHMA | | | | | | | | | |
| | | EDMA | | | | | | | | | |
| | Aromatic vinyl compound (a5) | ST | | 3 | 5 | 5 | | 3 | 5 | 3 | 2 |
| | Second-stage ratio | | 25 | 13 | 47 | 53 | 11 | 18 | 25 | 34 | 30 |
| Composition of Polymer (A) (Total) | Unsaturated carboxylic acid (a1) | TA | 0 | 0 | 2 | 0 | 0 | 0 | 0 | 0 | 0 |
| | | AA | 6 | 2 | 12 | 23 | 5 | 6 | 8 | 5 | 3 |
| | | MAA | 4 | 0 | 11 | 12 | 3 | 4 | 9 | 4 | 0 |
| | α,β-unsaturated nitrile compound (a2) | AN | 25 | 25 | 30 | 15 | 35 | 12 | 8 | 25 | 30 |
| | Conjugated diene compound (a3) | BD | 50 | 50 | 35 | 38 | 50 | 55 | 55 | 48 | 50 |
| | Unsaturated carboxylic acid ester (a4) | MMA | 3 | 3 | 2 | 2 | 2 | 3 | 2 | 3 | 3 |
| | | CHMA | 0 | 1 | 0 | 0 | 0 | 1 | 1 | 1 | 1 |
| | | EDMA | 0 | 1 | 0 | 0 | 0 | 1 | 0 | 1 | 1 |
| | Aromatic vinyl compound (a5) | ST | 12 | 18 | 8 | 10 | 5 | 18 | 17 | 13 | 12 |
| | Total | | 100 | 100 | 100 | 100 | 100 | 100 | 100 | 100 | 100 |
| Elemental analysis (Content ratio of water-eluting N element component) | N_{A} | | 24 | 23.5 | 28.8 | 14.6 | 33.2 | 11 | 7.5 | 23.5 | 28.2 |
| | N_{B} | | 2.27 | 1.2 | 2.8 | 1.4 | 3.2 | 0.8 | 0.6 | 2.34 | 1.5 |
| | N_{B}/N_{A} | | 0.095 | 0.051 | 0.097 | 0.096 | 0.096 | 0.073 | 0.080 | 0.100 | 0.053 |
| Water-eluting extract | Water soluble extract (C) (mass%) | | 3.8 | 1.3 | 6.2 | 6.8 | 5.1 | 4.4 | 4.6 | 6.4 | 2.2 |
| | C/Cₐ₁ | | 0.38 | 0.65 | 0.25 | 0.19 | 0.64 | 0.44 | 0.27 | 0.71 | 0.73 |
| Physical properties of Polymer (A) | Z-average particle diameter (nm) | | 165 | 170 | 180 | 200 | 185 | 165 | 170 | 170 | 175 |
| | Electrolyte solution swelling rate (%) | | 240 | 280 | 300 | 220 | 340 | 200 | 160 | 230 | 300 |
| Evaluation results | Adhesion strength | | 5 | 3 | 4 | 5 | 4 | 4 | 5 | 4 | 3 |
| | Battery resistance (resistance increase rate) | | 5 | 5 | 5 | 5 | 5 | 4 | 4 | 4 | 5 |
| | 45°C cycle properties | | 5 | 3 | 4 | 4 | 4 | 5 | 3 | 4 | 3 |
| | Electrode expansion | | 5 | 4 | 5 | 5 | 5 | 4 | 4 | 4 | 4 |
| | Electrode slurry bubble-breaking property | | 4 | 5 | 3 | 3 | 3 | 4 | 4 | 3 | 3 |

**[Table 2]**

| | | Monomer | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|
| | | | Polymer (A10) | Polymer (A11) | Polymer (A12) | Polymer (B1) | Polymer (B2) | Polymer (B3) | Polymer (B4) | Polymer (B5) |
| Composition of Polymer (A) (First stage) | Unsaturated carboxylic acid (a1) | TA | | | 4 | | | | | |
| | | AA | 4 | 2 | | 30 | 0.5 | 5 | 8 | 4 |
| | | MAA | 3 | 1 | 4 | 5 | | 5 | | 4 |
| | α,β-unsaturated nitrile compound (a2) | AN | 20 | 20 | 20 | 18 | 20 | | 38 | 23 |
| | Conjugated diene compound (a3) | BD | 6 | 58 | 30 | 25 | 45 | 35 | 30 | 45 |
| | Unsaturated carboxylic acid ester (a4) | MMA | 3 | | | | 3 | 3 | | 3 |
| | | CHMA | 1 | | | | 2 | 2 | | |
| | | EDMA | 1 | | | | | | | |
| | Aromatic vinyl compound (a5) | ST | 15 | 3 | 5 | | 10.5 | 25 | 2 | 12 |
| | First-stage ratio | | 53 | 84 | 63 | 78 | 81 | 75 | 78 | 91 |
| | | TA | | | 2 | 2 | | | | |
| | | AA | 10 | 2 | 5 | | | 2 | | 2 |
| Composition of Polymer (A) (Second stage) | Unsaturated carboxylic acid (a1) | MAA | | 2 | | 10 | | | 2 | |
| | α,β-unsaturated nitrile compound (a2) | AN | 5 | 2 | 15 | 3 | 5 | | 7 | 2 |
| | Conjugated diene compound (a3) | BD | 4 | 10 | 15 | 2 | 5 | 15 | 10 | 5 |
| | Unsaturated carboxylic acid ester (a4) | MMA | 4 | | | | | | | |
| | | CHMA | 4 | | | | | | | |
| | | EDMA | | | | | | | | |
| | Aromatic vinyl compound (a5) | ST | 20 | | | 5 | 9 | 8 | 3 | |
| | Second-stage ratio | | 47 | 16 | 37 | 22 | 19 | 25 | 22 | 9 |
| Composition of Polymer (A) (Total) | Unsaturated carboxylic acid (a1) | TA | 0 | 0 | 6 | 2 | 0 | 0 | 0 | 0 |
| | | AA | 14 | 4 | 5 | 30 | 0.5 | 7 | 8 | 6 |
| | | MAA | 3 | 3 | 4 | 15 | 0 | 5 | 2 | 4 |
| | α,β-unsaturated nitrile compound (a2) | AN | 25 | 22 | 35 | 21 | 25 | 0 | 45 | 25 |
| | Conjugated diene compound (a3) | BD | 10 | 68 | 45 | 27 | 50 | 50 | 40 | 50 |
| | Unsaturated carboxylic acid ester (a4) | MMA | 7 | 0 | 0 | 0 | 3 | 3 | 0 | 3 |
| | | CHMA | 5 | 0 | 0 | 0 | 2 | 2 | 0 | 0 |
| | | EDMA | 1 | 0 | 0 | 0 | 0 | 0 | 0 | 0 |
| | Aromatic vinyl compound (a5) | ST | 35 | 3 | 5 | 5 | 19.5 | 33 | 5 | 12 |
| | Total | | 100 | 100 | 100 | 100 | 100 | 100 | 100 | 100 |
| Elemental analysis (Content ratio of water-eluting N element component) | N_{A} | | 24.2 | 21.4 | 32.8 | 16.2 | 24.2 | 0 | 42.6 | 22.8 |
| | N_{B} | | 2.3 | 1.7 | 3.1 | 4.5 | 0.9 | 0 | 3.6 | 3.8 |
| | N_{B}/N_{A} | | 0.095 | 0.079 | 0.095 | 27.8 | 3.72 | n.d. | 8.45 | 16.7 |
| Water-eluting extract | Water soluble extract (C) (mass%) | | 5.5 | 4.5 | 6.4 | 8.5 | 0.6 | 4.6 | 7.8 | 9.5 |
| | C/Cₐ₁ | | 0.32 | 0.64 | 0.43 | 18.1 | 120.0 | 38.3 | 78.0 | 95.0 |
| Physical properties of Polymer (A) | Z-average particle diameter (nm) | | 175 | 175 | 180 | 210 | 150 | 155 | 200 | 170 |
| | Electrolyte solution swelling rate (%) | | 280 | 320 | 340 | 220 | 250 | 140 | 510 | 250 |
| Evaluation results | Adhesion strength | | 3 | 5 | 4 | 3 | 2 | 4 | 3 | 4 |
| | Battery resistance (resistance increase rate) | | 4 | 3 | 4 | 3 | 2 | 1 | 2 | 5 |
| | 45°C cycle properties | | 3 | 4 | 4 | 2 | 2 | 2 | 2 | 5 |
| | Electrode expansion | | 3 | 5 | 5 | 2 | 2 | 1 | 2 | 4 |
| | Electrode slurry bubble-breaking property | | 3 | 4 | 3 | 1 | 5 | 5 | 1 | 1 |

The polymer numbers synthesized in each example are described in the row below the example numbers and comparative example numbers in Table 1 to Table 2 above. The monomers in Table 1 to Table 2 above represent the following compounds, respectively.

### <Unsaturated Carboxylic Acid>

- TA: itaconic acid
- AA: acrylic acid
- MAA: methacrylic acid

### <α,β-unsaturated Nitrile Compound>

- AN: acrylonitrile

### <Conjugated Diene Compound>

- BD: 1,3-butadiene

### <Unsaturated Carboxylic Acid Ester>

- MMA: methyl methacrylate
- CHMA: cyclohexyl methacrylate
- EDMA: ethylene glycol dimethacrylate

### <Aromatic Vinyl Compound>

- ST: styrene

In Examples 1 to 12, the slurry for an electric power storage device electrode containing the binder composition for an electric power storage device of the invention and an active material containing a silicon material was used. By containing the binder composition for an electric power storage device of Examples 1 to 12, the binder particles were not damaged by the active material having a large volume change through charging and discharging, and the particle shape was maintained. As a result, it is found that the active materials can be suitably bound to each other, the electrode plate expansion rate can be reduced, and the adhesion between the active material layer and the current collector can be maintained satisfactorily. In addition, since the polymer (A) contains a sufficient amount of the repeating unit (a1) derived from an unsaturated carboxylic acid and the repeating unit (a2) derived from an α,β-unsaturated nitrile compound, bubbles remaining in the slurry for an electric power storage device electrode can be suppressed, and thus improvement in handling properties from the perspective of the electrode manufacturing process is expected. Furthermore, it is found that by containing the binder composition for an electric power storage device of Examples 1 to 12, the permeability to the electrolyte solution is enhanced and the resistance increase rate can also be suppressed. As a result of these findings, it is presumed that an electric power storage device electrode having favorable cycle properties is obtained, in which peeling of the active material layer is suppressed and electrode plate expansion is reduced even in the case where charging and discharging are repeated and volume expansion and contraction due to the active material are repeated.

The invention is not limited to the above-described embodiments, and various modifications are possible. The invention encompasses configurations substantially identical to the configurations described in the embodiments (for example, configurations having identical functions, methods, and results, or configurations having identical purposes and effects). The invention also encompasses configurations in which non-essential parts of the configurations described in the above-described embodiments are replaced with other configurations. Furthermore, the invention encompasses configurations that achieve the same operational effects as the configurations described in the above-described embodiments or configurations that can achieve the same purposes. Furthermore, the invention also encompasses configurations in which conventional techniques are added to the configurations described in the above-described embodiments.

## Claims

1. A binder composition for an electric power storage device, the binder composition comprising:
a polymer (A) and a liquid medium (B),
wherein, when a total of repeating units contained in the polymer (A) is 100 mass%, the polymer (A) comprises:
1 mass% to 40 mass% of a repeating unit (a1) derived from an unsaturated carboxylic acid; and
5 mass% to 40 mass% of a repeating unit (a2) derived from an α,β-unsaturated nitrile compound, and satisfies Condition as follows:
<Condition>
a film of 0.30 g obtained by placing 0.30 g of the polymer (A) in terms of solid content into a petri dish having a diameter of 5 cm and drying in a thermostatic chamber at 130°C for 30 minutes is cut into 5 mm widths, all fragments of the obtained film are immersed in 30 mL of a sodium hydroxide aqueous solution (0.01 M) at pH 12 and stirred in a warm water bath at 65°C for 2 hours, and, after stirring, components eluting into an aqueous layer are separated and dried to a dry solid, and a ratio (N_{B}/N_{A}) between a content of N element components contained in the dry solid, defined as N_{B}, and a content of N element components contained in the polymer (A), defined as N_{A}, is 0.10 or less.

2. The binder composition for the electric power storage device according to claim 1, wherein, when a content of the components eluting into the aqueous layer is defined as C, a ratio (C/Cₐ₁) between the content C and a content Cₐ₁ of the repeating unit (a1) derived from the unsaturated carboxylic acid is 0.65 or less.

3. The binder composition for the electric power storage device according to claim 1 or claim 2, wherein the polymer (A) further comprises 5 mass% to 65 mass% of a repeating unit (a3) derived from a conjugated diene compound.

4. The binder composition for the electric power storage device according to claim 1 or claim 2, wherein, based on 100 mass% of the polymer (A), a ratio of the components eluting into the aqueous layer is 5 mass% or less.

5. The binder composition for the electric power storage device according to claim 1 or claim 2, wherein an electrolyte solution swelling rate when the polymer (A) is immersed in a solvent formed of propylene carbonate and diethyl carbonate at a volume fraction of 1:1 under a condition of 70°C for 24 hours is 150% or more and 500% or less.

6. The binder composition for the electric power storage device according to claim 1 or claim 2, wherein the polymer (A) is polymer particles, and a Z-average particle diameter of the polymer particles is 50 nm or more and 500 nm or less.

7. The binder composition for the electric power storage device according to claim 1 or claim 2, wherein the liquid medium (B) is water.

8. A slurry for an electric power storage device electrode, the slurry comprising: the binder composition for the electric power storage device according to claim 1; and an active material.

9. The slurry for the electric power storage device electrode according to claim 8, comprising graphite and a silicon material as the active material.

10. The slurry for the electric power storage device electrode according to claim 8 or claim 9, further comprising a thickener.

11. An electric power storage device electrode, comprising: a current collector; and an active material layer, formed by applying and drying the slurry for the electric power storage device electrode according to claim 8 on a surface of the current collector.

12. An electric power storage device, comprising the electric power storage device electrode according to claim 11.
